# DEMANDE DE BREVET EUROPEEN

(11) **EP 4 282 842 A2**
(43) Date de publication de la demande: **29.11.2023**
(21) Numéro de dépôt: 23203205.2
(22) Date de dépôt: 28.06.2021
(51) Int. Cl.: C04B 2/12

(54) **PROCÉDÉ DE CALCINATION DE ROCHE MINÉRALE DANS UN FOUR DROIT VERTICAL À FLUX PARALLÈLES RÉGÉNÉRATIF ET FOUR MIS EN OEUVRE**

(30) Priorité: 03.07.2020 BE 202005498; 27.11.2020 WO PCT/EP2020/083769
(62) Demande divisionnaire de: 21735319.2
(71) Demandeur: S.A. LHOIST RECHERCHE ET DEVELOPPEMENT, 1342 Ottignies-Louvain-la-Neuve (BE)
(72) Inventeur: HABIB, Ziad, 1630 Linkebeek (BE); VAN CANTFORT, Olivier, 1150 Woluwe-Saint-Pierre (BE); CLOAREC, Tristan, 64490 Urdos (FR)
(74) Mandataire: Calysta NV

(57) **Abrégé**

La présente invention se rapporte à un procédé de calcination de roche minérale dans un four droit vertical à flux parallèles régénératif comprenant un prélèvement d'une partie de l'effluent gazeux évacué hors de la cuve en mode préchauffage (2) du four dans un circuit de recirculation (18), une formation d'un mélange comburant par mélange de cette partie prélevée de l'effluent gazeux avec du dioxygène concentré, provenant d'une source de dioxygène (20), et une introduction de ce mélange comburant au haut de la cuve en mode cuisson (1) de manière à assurer ladite combustion de combustible en présence d'oxygène, l'effluent gazeux évacué hors du four étant concentré en CO₂.

## Description

La présente invention se rapporte à un procédé de calcination de roche minérale carbonatée dans un four droit vertical à flux parallèles régénératif ainsi qu'au four mis en oeuvre.

Le four droit vertical à flux parallèles régénératif ou four à chaux régénératif dit « PFRK » (Parallel Flow Regenerative Kiln ) a une efficacité énergétique de 85% à 90% ; c'est la plus élevée du secteur chaux, voire de tout le secteur de l'industrie énergivore : ciment, acier, verre... 60% de la chaux en Europe est produite dans ce type de four. Cette proportion est amenée à augmenter en Europe et dans le monde, en tenant compte des feuilles de route pour la transition énergétique et écologique.

Le four « PFRK » est un four droit à double cuves verticales où le combustible est injecté alternativement dans une cuve puis dans une autre pendant environ 10 à 15' avec une période d'arrêt entre cycles d'environ 1' à 2' pour inverser les circuits d'air et de combustibles. C'est la période d'« inversion ». Les deux cuves sont reliées par un carneau de liaison. Lorsqu'une cuve est en combustion (mode cuisson), les fumées de combustion chaudes traversent le carneau de liaison (voie de transfert pour gaz) et cèdent une partie de leur chaleur à la roche minérale à calciner pour la préchauffer dans l'autre cuve dite en mode régénération ou préchauffage. Les cuves du four PFRK sont soit cylindriques soit rectangulaires. Dans certains cas, il y a trois cuves, deux en préchauffage et une en cuisson. Les problèmes et les solutions énoncés plus bas sont valables pour toutes les géométries de four PFRK.

Le procédé mis en oeuvre dans ces fours connus comprend, en régime production,
- un chargement de roche minérale carbonatée en haut du four,
- un préchauffage de cette roche,
- une cuisson de cette roche avec sa décarbonatation en matière calcinée,
- un refroidissement de la matière calcinée par de l'air de refroidissement, et
- un déchargement de la matière calcinée en bas des cuves,
- chaque cuve fonctionnant alternativement en mode cuisson et en mode préchauffage, une cuve étant en mode cuisson pendant une période de temps prédéterminée pendant qu'au moins une autre cuve est en mode préchauffage, et inversement,
- le mode cuisson comprenant :
   ledit chargement de roche minérale carbonatée au haut de la cuve en mode cuisson,
   en présence de ladite roche minérale carbonatée, préchauffée, en cours de descente dans cette cuve, une combustion de combustible en présence d'oxygène de façon à obtenir ladite cuisson de cette roche et sa décarbonatation en matière calcinée avec dégagement de fumées de combustion sous la forme d'un courant gazeux descendant en co-courant dans la cuve en mode cuisson, et
   un passage dudit courant gazeux contenant ces fumées de combustion de la cuve en mode cuisson vers ladite au moins une cuve en mode préchauffage par l'intermédiaire de ladite voie de transfert pour gaz,
- le mode préchauffage comprenant :
   ledit préchauffage de la roche minérale carbonatée chargée par échange de chaleur avec le courant gazeux contenant les fumées de combustion, issues de la voie de transfert pour gaz, qui est ascendant dans ladite au moins une cuve en mode préchauffage, en contre-courant de ladite roche minérale carbonatée chargée, et
      une évacuation hors du four d'un effluent gazeux à base du courant gazeux contenant les fumées de combustion, au haut de ladite au moins une cuve en mode préchauffage.

Par roche minérale carbonatée, au sens de la présente invention, on entend en particulier de la roche calcaire, de la roche dolomitique et/ou de la magnésite qui se calcinent respectivement en chaux vive, en dolomie vive et /ou en magnésie. L'équation de calcination du calcaire en chaux est la suivante :

CaCO₃ (solide) + chaleur ←→ CaO (solide)+ CO₂ (gaz)

C'est une réaction endothermique réversible et la chaux se recombine avec le CO₂ à la première occasion en dessous de 900°C, avec un équilibre et une cinétique plus ou moins rapide en fonction de la température et de la concentration ambiante du CO₂.

Au cours de ce processus, la roche calcaire ou dolomitique de départ dégage donc un important volume de CO₂ pendant sa calcination en chaux ou dolomie. De plus, pour réaliser cette calcination, il faut atteindre des températures élevées et donc procéder à la combustion de combustibles, ce qui, à son tour, provoque un dégagement important de CO₂. Globalement, les procédés de calcination présentent l'inconvénient de participer activement à l'augmentation de l'effet de serre.

Ce procédé de calcination tout à fait courant présente aussi l'inconvénient de prévoir une combustion de combustible avec de l'air et le refroidissement du produit calciné par de l'air. Il en résulte un dégagement au haut du four d'un effluent gazeux présentant un taux élevé d'azote diatomique, et un taux comparativement faible de CO₂ (concentration en volume de l'ordre de 20% à 27% sur gaz sec), qu'il est coûteux de capturer en raison de la forte présence de diazote provenant de l'air utilisé.

Pour capter ce CO₂ on peut penser utiliser le procédé d'abattement par solvant chimique dit « amines » qui est la technique la plus répandue et appliquée sur les fumées de four en fin de ligne, après le filtre de dépoussiérage. Mais le caractère cyclique du four PFRK avec un arrêt du four de 1' à 2 ' toutes les 10' à 15' est incompatible avec cette technique, laquelle par ailleurs est très coûteuse et fait appel à un solvant non pérenne par rapport aux législations environnementales.

Pour pouvoir capter le CO₂ émis dans un four PFRK, on a déjà proposé de remplacer, dans le procédé mis en oeuvre, tout l'air du procédé, air de combustion porteur du combustible solide et air de refroidissement, par des fumées de combustion recyclées et d'introduire dans la cuve en mode cuisson de l'oxygène pur (voir CN10500081 1). Pour tout homme de métier, il est clairque ce procédé est irréalisable, car la chaux va se recarbonater au cours du refroidissement. Comme vu plus haut, le CO₂ ne peut pas être recirculé pour refroidir la chaux, car elle se recombinera immédiatement avec ce CO₂ pour reformer du CaCOs. D'autre part, l'utilisation d'oxygène pur en tête de four poserait de sérieux problèmes en termes de compatibilité des matériaux et cet apport ne constituera pas un flux massique suffisant pour récupérer efficacement la chaleur accumulée dans la zone de régénération. Les désavantages et problèmes de faisabilité de ce procédé ont déjà été discutés dans la demande de brevet US2020/0048146.

A noter également que l'air de refroidissement dans le four PFRK, contrairement au four rotatif par exemple, n'a pas d'impact direct sur la combustion et le déroulement de la calcination dans la cuve en mode cuisson. Il n'a pas d'effet attendu sur la qualité du produit.

Par régime production, il faut entendre que le four est dans son service normal pendant lequel il produit de manière continue de la matière calcinée. Ce régime ne concerne donc pas les phases de démarrage du four, d'arrêt de celui-ci ou de maintenance en cas de dysfonctionnement.

La présente invention a pour but de porter au moins partiellement remède au problème d'émission importante de CO₂ dans l'atmosphère des fours de type PFRK, sans modifier leur fonctionnement cyclique et en n'apportant pas ou peu de modifications à leur structure. Elle a donc aussi pour but de permettre une capture du CO₂ présent dans les effluents gazeux émis par le four.

Pour résoudre ce problème, on a prévu, suivant l'invention, un procédé de calcination de roche minérale dans un four droit vertical à flux parallèles régénératif tel qu'indiqué au début, ce procédé comprenant en outre
- un prélèvement d'une partie de l'effluent gazeux évacué hors du four,
- une formation d'un mélange comburant par mélange de cette partie prélevée de l'effluent gazeux évacué hors du four avec du dioxygène concentré, et
- une introduction de ce mélange comburant au haut de la cuve en mode cuisson de manière à assurer ladite combustion de combustible en présence d'oxygène,
l'effluent gazeux évacué hors du four étant concentré en CO₂.

La combustion du combustible dans du dioxygène concentré donnerait lieu à des températures de flamme trop élevées pour les équipements usuels du four. Aussi, il est prévu suivant l'invention de prélever une partie de l'effluent gazeux riche en CO₂ et de le mélanger au dioxygène. Au lieu d'un comburant usuel formé du mélange O₂ + N₂ de l'air, on obtient ainsi un mélange O₂ + CO₂ à température de flamme appropriée.

La combustion du combustible dans du dioxygène donne lieu au courant gazeux contenant les fumées de combustion et à la calcination de la roche carbonatée. Cela a pour effet de produire principalement du CO₂ à côté de quelques impuretés, présentes sous la forme de traces dans le combustible et dans la matière à calciner, et d'un peu d'oxygène non consommé par la combustion du combustible. Ces fumées de combustion comportent naturellement également le CO₂ amené dans le mélange comburant. Il en résulte évidemment, par rapport au procédé classique, une augmentation drastique de la teneur en CO₂ de l'effluent gazeux dégagé au haut du four. Par effluent gazeux concentré en CO₂, il faut entendre suivant l'invention qu'il présente une teneur en CO₂ d'au moins 35%, avantageusement d'au moins 45%, de préférence d'au moins 60%, notamment d'au moins 80%, et particulièrement avantageusement d'au moins 90% en volume sur gaz sec. Ce CO₂ devient ainsi utilisable ou séquestrable dans des conditions favorables, ce qui permet de diminuer radicalement la contribution à l'effet de serre du four.

La mise en oeuvre de ce procédé ne requiert pas nécessairement d'aménagement particulier du four en soi. Les seules modifications à apporter à celui-ci peuvent être simplement extérieures au four et consister à changer les circuits des effluents sortant du four et à prévoir au moins une source de dioxygène concentré.

Par dioxygène concentré (encore appelé oxygène dans la suite), il faut entendre suivant l'invention un gaz dont le taux en oxygène dépasse 50% en volume. Il sera de préférence égal ou supérieur à 90%, en particulier à 93%, avantageusement de 98 à 100% en volume. La source de dioxygène concentré peut, par exemple, être une unité de séparation d'air qui sépare l'air en dioxygène et diazote et qui travaille en parallèle au four, ou encore un réservoir de dioxygène installé à côté du four. Avantageusement, la combustion de combustible a lieu en présence d'un excès d'oxygène, de préférence de l'ordre de 5 à 50%, en particulier de 10 à 30%, avantageusement de 15 à 25% en volume par rapport aux besoins stoechiométriques de la combustion.

Par combustible, on entend, suivant l'invention, tout combustible solide, liquide ou gazeux, par exemple du gaz naturel, de l'hydrogène, du biogaz, du fioul, des huiles, du charbon ou du coke en poudre, de la biomasse solide, comme de la sciure de bois, du combustible solide de récupération, comme des plastiques, du papier, des cartons, etc. Avantageusement, dans le cas d'un combustible solide, son introduction dans la cuve en mode cuisson est effectuée sous une forme granulaire ou pulvérulente à l'aide d'une portion de ladite partie prélevée de l'effluent gazeux évacué hors du four, comme gaz porteur. On peut aussi prévoir, comme gaz porteur, du CO₂ en provenance d'une autre source quelconque.

Suivant un mode de réalisation de l'invention, le refroidissement de la matière calcinée comprend, au bas de chacune des cuves, une amenée d'air de refroidissement qui traverse en contre-courant la matière calcinée descendante et est chauffé à son contact, l'air de refroidissement chauffé se mélangeant, dans la cuve en mode cuisson, au courant gazeux contenant les fumées de combustion, avant son passage à travers la voie de transfert pour gaz, et, dans ladite au moins une cuve en mode préchauffage, à ce courant gazeux après ce passage, l'effluent gazeux concentré en CO₂ qui est évacué hors du four contenant les fumées de combustion et l'air de refroidissement. Dans ce cas, seul l'air de combustion du procédé classique est remplacé par le mélange comburant à base de l'effluent gazeux concentré en CO_{2,} évacué hors du four, et d'oxygène. Un tel procédé permet d'augmenter la teneur en CO₂ de l'effluent gazeux évacué hors du four PFRK classique de 20 à 27% en volume sur gaz sec à une valeur d'au moins 35%, avantageusement d'au moins 45%, et même jusqu'à 65% en volume sur gaz sec dans un four suivant l'invention. Pour illustration, un four PFRK mettant en oeuvre ce procédé peut avantageusement remplacer le four à coke actuellement utilisé dans les soudières, pour fournir des fumées à 40% en volume de CO₂. Par ailleurs, le PFRK est un four « durable », économe en énergie, et surtout il élimine tous les problèmes environnementaux liés aux fours à coke, dont les émissions importantes de polluants (CO, NH₃, H₂S...).

Suivant un mode de réalisation particulier de l'invention, l'air de refroidissement est amené au four en un volume total équivalant ou inférieur à un minimum thermodynamique nécessaire pour refroidir la matière calcinée à une température de référence de 100°C. Avantageusement, le volume total d'air de refroidissement amené au four peut être de l'ordre de 40 à 60% dudit minimum thermodynamique, de préférence égal à 50% de celui-ci. Dans ce cas, le produit déchargé aura une température supérieure au fonctionnement normal. Il sera alors nécessaire d'adapter les équipements de déchargement en matériaux résistant à cette température.

On peut aussi avantageusement prévoir que ledit refroidissement de la matière calcinée comprenne, au bas de la seule cuve en mode cuisson, une amenée d'air de refroidissement qui traverse en contre-courant la matière calcinée descendante et est chauffé à son contact, l'air de refroidissement chauffé se mélangeant au courant gazeux contenant les fumées de combustion, avant son passage à travers la voie de transfert pour gaz, et l'effluent gazeux concentré en CO2 qui est évacué hors du four contenant les fumées de combustion et l'air de refroidissement. Dans ce cas-ci aussi, l'air de refroidissement peut être amené au four en un volume total inférieur à un minimum thermodynamique nécessaire pour refroidir la matière calcinée à une température de référence de 100°C. Avantageusement, le volume total d'air de refroidissement amené au four peut ainsi être de l'ordre de 40 à 60% dudit minimum thermodynamique, de préférence égal à 50% de celui-ci.

Suivant un mode particulièrement avantageux de l'invention, ledit refroidissement de la matière calcinée comprend, au bas de chacune des cuves ou au bas de la seule cuve en mode cuisson, une amenée d'air de refroidissement qui traverse en contre-courant la matière calcinée descendante et est chauffé à son contact, le procédé comprenant en outre une extraction hors du four de l'air de refroidissement chauffé, l'effluent gazeux évacué hors du four contenant une teneur en CO₂ d'au moins 90% en volume sur gaz sec, de préférence d'au moins 95%. Dans ce cas l'effluent gazeux évacué hors du four est formé presque exclusivement des fumées de combustion. Il devient possible d'utiliser un tel gaz dans des industries spécialisées ou de le séquestrer.

Suivant un mode particulier de l'invention, le procédé comprend en outre un échange de chaleur entre l'air de refroidissement chauffé, extrait hors du four, et ladite partie prélevée de l'effluent gazeux évacué hors du four, avant ou après son mélange avec du dioxygène concentré. Cela permet une récupération de chaleur dans le mélange comburant à introduire dans la cuve en mode cuisson.

D'autres détails et particularités du procédé suivant l'invention sont indiqués dans les revendications annexées.

La présente invention concerne également un four droit vertical à flux parallèles régénératif, de type PFRK.

Un tel four comprend
- au moins deux cuves interconnectées par une voie de transfert pour gaz,
   chacune desdites cuves comprenant, en position en service ou hors service,
- au moins un dispositif d'alimentation en combustible,
- au moins une ouverture d'amenée de comburant contenant de l'oxygène pour la combustion du combustible,
- une entrée pour le chargement d'une roche minérale carbonatée, au haut des cuves,
- une sortie pour le déchargement de matière calcinée produite, au bas des cuves,
- un conduit d'évacuation d'effluent gazeux au haut des cuves, qui est relié à une cheminée, et
- une amenée d'air de refroidissement pour refroidir la matière calcinée produite,
le four comprenant un système d'inversion du fonctionnement des cuves, agencé pour que chaque cuve fonctionne, en régime production, alternativement en mode cuisson et en mode préchauffage, une cuve étant en mode cuisson pendant une période de temps prédéterminée pendant qu'au moins une autre cuve est en mode préchauffage, et inversement, ce système d'inversion commandant dans ce but lesdites positions en service et hors service.

Suivant l'invention, le four comprend en outre
- un circuit de recirculation qui est agencé entre le conduit d'évacuation d'effluent gazeux susdit des cuves et lesdites ouvertures d'amenée de comburant des cuves et dans lequel ledit système d'inversion commande un prélèvement d'au moins une partie d'effluent gazeux issu d'une cuve en mode préchauffage, et
- une source de dioxygène concentré qui communique avec le circuit de recirculation pour l'alimenter en dioxygène concentré et former ainsi un mélange comburant, ladite ouverture d'amenée de comburant de la cuve en mode cuisson étant amenée en position en service par ledit système d'inversion pour assurer la combustion du combustible.

Comme expliqué plus haut, le four PFRK présente un fonctionnement cyclique, chaque cuve fonctionnant pendant une période de temps prédéterminée en mode cuisson, puis, après un temps d'inversion de 1 à 2 minutes, en mode préchauffage, et ainsi de suite. Pendant le temps d'inversion le système d'inversion commande de manière synchronisée tous les changements nécessaires pour passer d'un mode à l'autre, par exemple en ouvrant les lances du dispositif d'alimentation en combustible dans la cuve lorsqu'elle est en mode cuisson et en les fermant lorsqu'elle passe en mode préchauffage. Le système d'inversion commande donc non seulement de nombreux clapets et vannes, mais aussi le fonctionnement des équipements de chargement et de déchargement ou encore celui de divers éléments d'aspiration, de pompage ou d'injection.

Comme on peut le constater le four selon l'invention ne présente que quelques modifications structurelles apportées à l'extérieur du four. Des fours existants peuvent donc être aisément aménagés pour mettre en oeuvre un procédé de calcination suivant l'invention.

Suivant une forme de réalisation de l'invention, les cuves sont de section circulaire, ladite voie de transfert pour gaz est un carneau de liaison qui relie des canaux périphériques agencés autour de chaque cuve de manière à permettre un transfert de gaz et, en dessous du carneau de liaison, les cuves sont pourvues d'un anneau collecteur communiquant avec un élément de soutirage de manière à permettre une extraction hors du four d'air de refroidissement chauffé. Avantageusement les cuves circulaires comportent en outre, en fond de cuve, un élément collecteur central communiquant avec un élément de soutirage de manière à permettre une extraction hors du four d'air de refroidissement chauffé, en dessous du carneau de liaison.

Suivant une autre forme de réalisation du four suivant l'invention, les cuves sont de section rectangulaire, un premier côté d'une cuve faisant face à un premier côté de l'autre cuve voisine et chaque cuve comportant un second côté qui est à l'opposé de ceux qui se font face, la voie de transfert pour gaz étant un carneau de liaison qui relie directement une cuve à l'autre par leurs premiers côtés, et, en dessous du carneau de liaison, lesdits premiers côtés et lesdits seconds côtés des cuves sont chacun pourvus d'un tunnel collecteur communiquant avec un élément de soutirage de manière à permettre une extraction hors du four d'air de refroidissement chauffé.

Suivant une forme de réalisation de l'invention, le four comporte, comme source de dioxygène pour le circuit de recirculation, une unité de séparation d'air capable de séparer de l'air en dioxygène et diazote. On peut aussi prévoir une citerne à oxygène. Avantageusement, un échangeur de chaleur alimenté en air de refroidissement chauffé, extrait du four, est monté sur le circuit de recirculation pour chauffer le mélange comburant susdit avant son amenée à la cuve en mode cuisson.

D'autres détails et particularités du four selon l'invention sont indiqués dans les revendications annexées.

D'autres particularités de l'invention ressortiront également de la description donnée ci-après, à titre non limitatif et en faisant référence aux dessins annexés.
La figure 1 représente de manière schématique un four PFRK classique.
Les figures 2a et 2b représentent une modélisation numérique de la concentration en % massique d'oxygène des courants gazeux dans un four PFRK à section circulaire classique et dans un four PFRK à section rectangulaire classique.
Les figures 3 et 4 illustrent de manière schématique plusieurs formes de réalisation de four à section circulaire suivant l'invention.

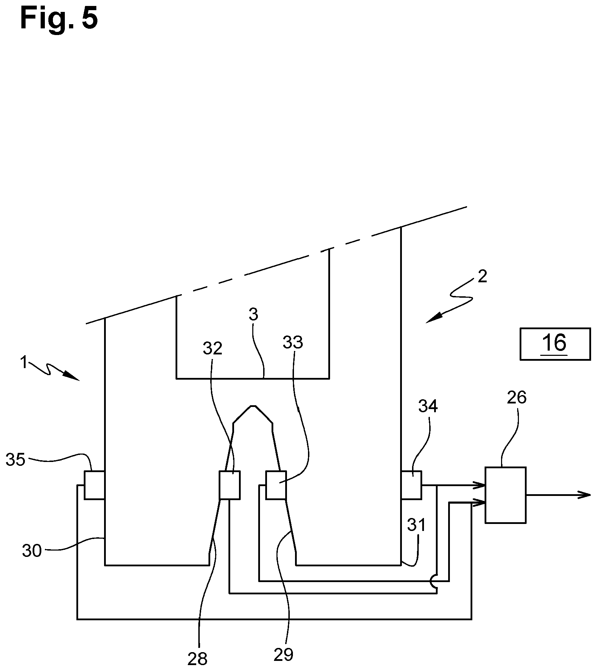

La figure 5 est une représentation brisée d'une forme de réalisation de four à section rectangulaire suivant l'invention.

Sur les figures, les éléments identiques ou analogues portent les mêmes références. D'une manière conventionnelle la cuve illustrée à gauche est en mode cuisson et la cuve illustrée à droite en mode préchauffage. Pour ne pas encombrer les dessins des éléments standards, comme par exemple les équipements de chargement ou déchargement, ils ne sont pas représentés ou ils le sont de manière très schématique.

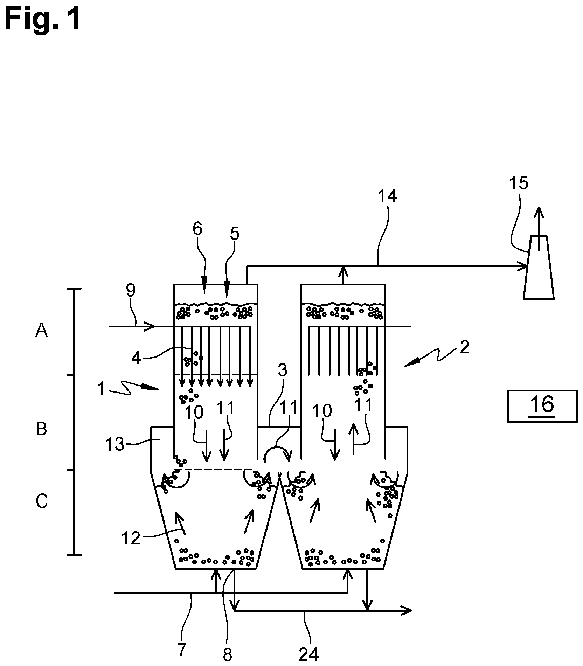

Comme on peut le voir à la figure 1, le four PFRK illustré est un four droit à double cuve 1, 2 où le combustible est injecté alternativement dans une cuve 1 puis dans une autre 2 pendant environ 12' avec une période d'arrêt entre cycles de 1' à 2' pour inverser les circuits. C'est la période d'« inversion ». Les deux cuves ont une section circulaire et sont pourvues de canaux périphériques 13 qui sont interconnectés par un carneau de liaison 3. Les cuves sont divisées en hauteur en trois zones, la zone de préchauffage A où la roche carbonatée est préchauffée avant calcination, la zone de combustion B où a lieu la cuisson de la roche carbonatée et la zone de refroidissement C où a lieu le refroidissement de la matière calcinée.

Lorsqu'une cuve est en mode cuisson, ici la cuve 1, un dispositif d'alimentation en combustible en forme de lances 4 injecte dans la cuve un combustible 9, qui, dans l'exemple illustré, est du gaz naturel. La roche carbonatée, chargée au haut de la cuve par une entrée 5 en position ouverte, descend progressivement dans celle-ci. De l'air de combustion est introduit au haut de la cuve par une ouverture d'amenée 6, ce qui permet une combustion du combustible à la sortie des lances 4 et une décarbonation de la roche carbonatée en matière calcinée 10. Le courant gazeux 11 formé par la combustion et la décarbonatation descend en co-courant de la matière calcinée et, par l'intermédiaire du canal périphérique 13, passe dans le carneau de liaison 3. De l'air de refroidissement est, par un conduit d'amenée 7, introduit au bas de la cuve, en contre-courant de la matière calcinée, pour la refroidir. L'air de refroidissement chauffé 12 se mélange au courant gazeux contenant les fumées de combustion 11 pour passer dans le carneau de liaison 3. La matière calcinée est déchargée par la sortie 8 dans un équipement de déchargement 24.

Lorsqu'une cuve est en mode préchauffage, ici la cuve 2, le dispositif d'alimentation en combustible est fermé et les lances 4 sont donc hors service. Il en est de même de l'entrée 5 pour la roche carbonatée et de l'ouverture 6 pour l'amenée de l'air de combustion. Par contre, le conduit d'amenée 7 pour l'air de refroidissement et la sortie 8 pour la matière calcinée restent en position d'ouverture. Après échange de chaleur avec la matière calcinée descendante 10, l'air de refroidissement chauffé se mélange au courant gazeux 11 qui, en provenance du carneau de liaison 3, parvient dans la cuve par le canal périphérique 13. Ce courant gazeux 11 progresse jusqu'au haut de la cuve où il est évacué du four par un conduit d'évacuation 14 et transféré vers une cheminée 15. Dans la cuve en mode cuisson 1, ce conduit d'évacuation 14 est fermé.

Le four comprend aussi un système d'inversion 16 représenté de manière schématique. Il commande de manière synchronisée le fonctionnement des cuves, pendant le temps d'inversion des cuves, et cela de manière directe ou à distance. Il commande la mise en service ou hors service de tous les éléments du four de façon que, en régime production, chaque cuve fonctionne alternativement en mode cuisson et en mode préchauffage.

Dans certains cas, il y a trois cuves, deux en préchauffage et une en combustion.

La figure 1 montre un four conçu pour la production de 430 tonnes de chaux par jour. Tous les débits gazeux mentionnés dans la suite sont exprimés en Nm³/t de chaux produite.

De façon à réagir avec le gaz injecté comme combustible dans la cuve 1, 1120 Nm³/t d'air de combustion sont mis en oeuvre de manière à obtenir un excès d'air de 19% en poids par rapport aux besoins stœchiométriques, et de façon à former un volume de 100 Nm³ /t de CO₂ à la combustion. La concentration massique de l'oxygène dans le gaz entrant est de 23%, puisqu'il s'agit d'air. La température atteinte est alors largement supérieure à 900°C, ce qui entraîne une décarbonatation de la roche calcaire avec un dégagement de 380 Nm³ /t de CO₂. Pour refroidir la chaux produite à une température de l'ordre de 100°C, on introduit par le fond des deux cuves 290 Nm³ /t d'air de refroidissement, ce qui fait au total 580 Nm³ /t. A la cheminée on obtient 2250 Nm³ /t d'effluent gazeux qui contient 480 Nm³/t de CO₂, c'est-à-dire que cet effluent gazeux présente une teneur en CO₂ de 23% sur gaz sec. A cette faible teneur, le CO₂ est difficilement exploitable ou séquestrable et l'effluent gazeux est donc totalement dégagé à l'atmosphère.

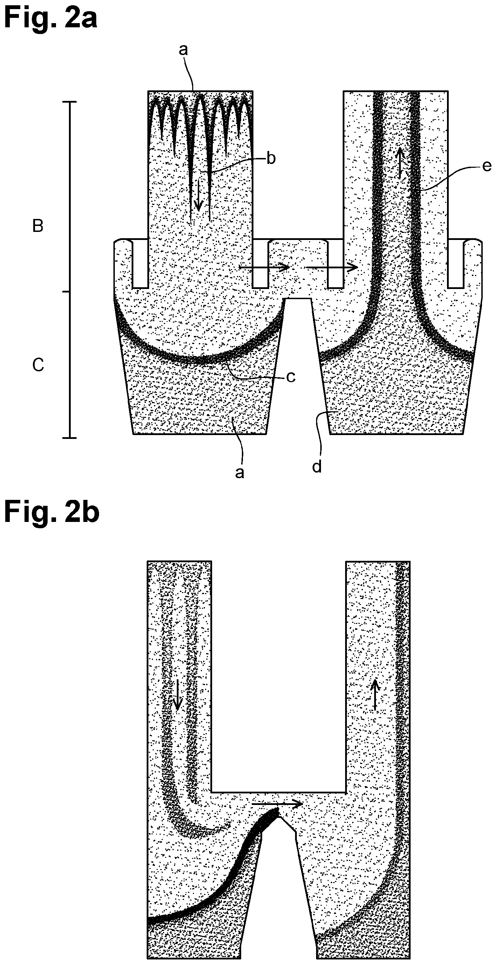

La figure 2a représente une modélisation numérique du four PFRK à section circulaire montrant le parcours des gaz en fonction de leur teneur en oxygène. Elle ne montre que la zone de combustion B, à partir de l'extrémité des lances, et la zone de refroidissement C, et donc le haut des cuves n'est pas représenté.

Zones a : dans la cuve en mode cuisson, air de refroidissement (en bas) et air de combustion (en haut, juste au-dessus de l'extrémité des lances) avec une teneur en O₂ de 23% en poids.

Zones b : jets de fumées de combustion émis par les lances, dans lesquels il n'y a quasiment plus d'oxygène et entre lesquels on peut encore trouver un peu d'O₂ qui n'a pas réagi.

Zone c : les fumées pénètrent profondément dans la zone de refroidissement C en se mélangeant petit à petit à l'air de refroidissement. Elles repoussent périphériquement le mélange gazeux dans le canal périphérique 13, puis le carneau de liaison 3.

Zone d : dans la cuve en mode préchauffage, air de refroidissement.

Zone e : mélange entre le courant gazeux provenant du canal périphérique 13 et l'air de refroidissement. Plus on progresse vers le centre de la cuve, plus la teneur résiduelle en O₂ augmente.

La figure 2b représente une pareille modélisation numérique sur un four PFRK dont les cuves ont une section rectangulaire. Ici la distribution des flux gazeux n'est plus symétrique comme dans le cas des cuves circulaires.

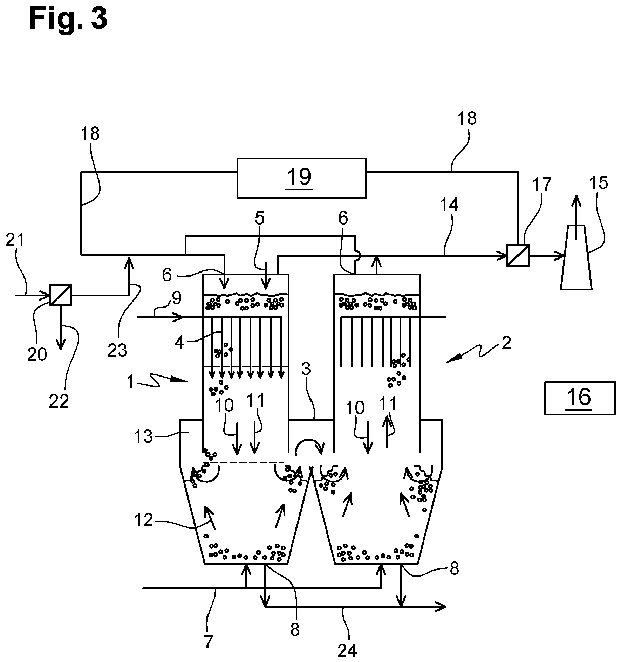

La figure 3 est une vue d'un four selon la présente invention. Dans ce cas, il n'y a pas de modification de la structure du four. A l'extérieur on a prévu, sur le conduit d'évacuation 14, un organe de séparation 17, capable de prélever une partie de l'effluent gazeux évacué du four et de l'introduire dans un circuit de recirculation 18. Dans ce circuit la partie d'effluent gazeux prélevée est avantageusement traitée dans une unité de traitement 19, où elle peut par exemple être filtrée et/ou séchée. Une unité de séparation d'air 20 sépare de l'air alimenté par le conduit 21 en N₂ évacué par le conduit 22 et en O₂ amené au circuit de recirculation 18 par le conduit d'amenée 23. Ce circuit 18 conduit ensuite le mélange comburant formé de la fraction recirculée d'effluent gazeux et de O₂ concentré au sommet de chacune des cuves à l'ouverture d'amenée 6.

Le fonctionnement du four de la figure 3 est semblable à celui d'un four PFRK. L'organe de séparation 17 est en service en continu, de même que l'unité de traitement 19 et l'unité de séparation d'air 20. Comme on l'a déjà vu, le système d'inversion 16 ferme le conduit d'évacuation 14 au haut de la cuve en mode cuisson. Il ouvre par contre, au sommet de cette cuve, l'ouverture d'amenée 6 pour permettre l'introduction du mélange comburant, tandis qu'elle est fermée au sommet de la cuve en mode préchauffage.

On met en oeuvre la même quantité de roche carbonatée et les mêmes débits de combustible et d'air de refroidissement que dans le four classique décrit plus haut. Par le conduit de recirculation 18 on prélève 830 Nm³/t d'effluent gazeux évacué hors du four, riche en CO₂. A cet effluent recirculé on mélange 160 Nm³/t de O₂, de façon à conserver dans le mélange comburant ainsi formé la même concentration massique de 23% de O₂ et d'obtenir lors de la combustion le même excès d'oxygène de 19% en poids par rapport aux besoins stœchiométriques. L'azote N₂ de l'air de combustion est ainsi remplacé par son équivalent massique de CO₂. Comme celui-ci est plus lourd que le diazote (poids spécifique de 1,977 par rapport à 1,25 g/Nm³), le volume total des fumées diminue dans le four, ce qui occasionne une diminution de la perte de charge de 13% par rapport au four classique. A la cheminée il y a dégagement de 1240 Nm³/t d'effluent gazeux qui contient à présent 43 % en volume sur gaz sec de CO₂. A cette teneur, comme expliqué plus haut, une exploitation industrielle devient possible, comme par exemple dans des soudières.

Comme variante dans un tel four suivant l'invention, on peut, pour diminuer encore davantage l'apport d'air dans le procédé, réduire le débit d'air de refroidissement. Par exemple, on peut réduire cet apport de 50%, ce qui fait 290 Nm³/t d'air de refroidissement. On peut introduire ce volume réduit par le conduit d'amenée 7 de la seule cuve en mode cuisson ou en faisant usage des conduits d'amenée 7 des deux cuves. Cette mesure a pour effet de réduire la dilution des fumées de 50%. Il en résulte un refroidissement moindre de la matière calcinée qui est évacuée par les sorties 8. Il devient alors nécessaire de prévoir des équipements de déchargement qui résistent à une température plus élevée que 100°C, par exemple une table de déchargement en acier réfractaire et des chaînes trainantes en acier. Comme la chaux sort plus chaude, il y a donc eu moins de récupération de chaleur par l'air de refroidissement, ce qui est compensé par une légère augmentation de l'apport de combustible à un débit tel qu'il occasionne à la combustion une formation de 120 Nm³/t de CO₂. Cette augmentation nécessite à son tour, dans l'effluent gazeux évacué hors du four de 1730 Nm³/t, une adaptation de son prélèvement dans le circuit de recirculation à 865 Nm³/t et un mélange de cet effluent prélevé avec 200 Nm³/t de O₂ de façon à conserver dans le mélange comburant ainsi formé la même concentration massique de 23% de O₂ et d'obtenir lors de la combustion le même excès d'oxygène de 19% en poids par rapport aux besoins stœchiométriques. A la cheminée on obtient alors seulement 865 Nm³/t d'effluent gazeux présentant une teneur élevée en CO₂ de 63% en volume sur gaz sec.

En fait, une concentration de CO₂ sur mesure entre 40% et 65% en volume de CO₂ peut être établie à la cheminée en réglant la quantité de l'air de refroidissement entre 100% et 50% du volume minimum thermodynamique nécessaire pour refroidir la matière calcinée à une température de référence de 100°C. Une concentration plus élevée en CO₂ pourrait être obtenue en réduisant l'apport d'air de refroidissement en dessous de 50%, dans la limite de compatibilité de la température de la chaux avec le système de déchargement et de transport haute température installé pour cela.

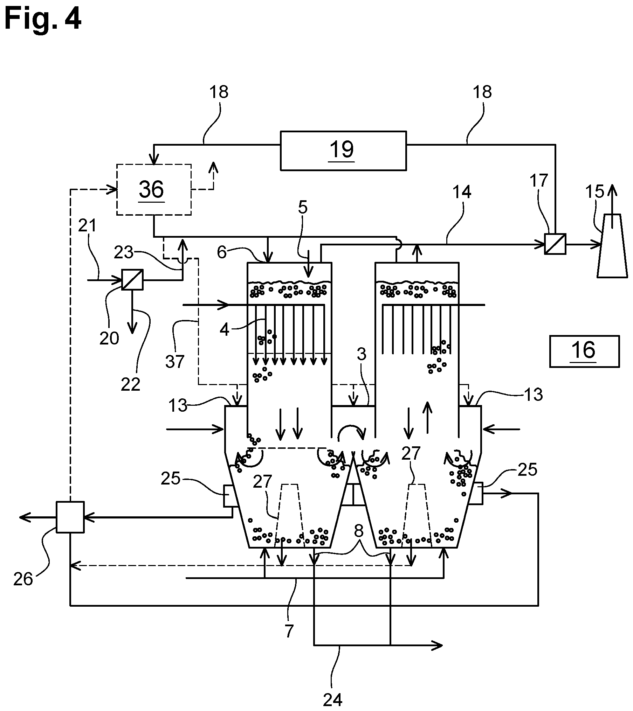

La figure 4 est une vue d'un four avantageux selon la présente invention. Comme on peut le voir, cette forme de réalisation comprend les caractéristiques de la forme de réalisation selon la figure 3, mais, en plus, elle comporte une légère transformation au niveau de la structure extérieure du four.

Il s'agit ici de soutirer l'air de refroidissement chauffé par contact avec la matière calcinée, par installation d'un système d'extraction. Les cuves 1 et 2 sont chacune pourvues, en dessous du carneau de liaison 3 et des canaux périphériques 13, d'un anneau collecteur 25 qui communique avec un élément de soutirage 26 de manière à permettre une extraction hors du four de l'air de refroidissement chauffé. De cette façon, on peut soutirer une partie ou la totalité de l'air de combustion, au besoin en soutirant également une faible proportion des fumées de combustion. En effet, comme le montre la figure 2a, du fait que les gaz descendants pénètrent profondément dans la zone de refroidissement C, l'air de refroidissement est poussé vers les parois extérieures du four où est agencé l'anneau collecteur. Les cuves peuvent en outre comprendre éventuellement, au fond, un élément collecteur central 27 communiquant avec l'élément de soutirage 26 de manière à permettre aussi une extraction centrale d'air de refroidissement chauffé, en dessous du carneau de liaison 3.

Dans le cas de fours rectangulaires, il est aussi possible de soutirer l'air de refroidissement sans anneau collecteur, par des reprises latérales. Ainsi qu'il ressort de la figue 5, chaque cuve comporte 4 côtés. Un côté 28 d'une cuve fait face à un côté 29 de la cuve voisine et chaque cuve comporte un second côté 30 et respectivement 31 qui est à l'opposé de ceux qui se font face. La voie de transfert pour gaz est un carneau de liaison 3 qui relie directement une cuve à l'autre par leurs côtés 28 et 29. En dessous du carneau de liaison, les côtés 28 à 31 sont chacun pourvus d'un tunnel collecteur 32 à respectivement 35 communiquant avec un élément de soutirage 26 de manière à permettre une extraction hors du four d'air de refroidissement chauffé.

Comme la répartition des courants gazeux dans un four à cuve rectangulaire n'est pas symétrique (voir figure 2b), l'air de refroidissement n'est poussé par les fumées chaudes que vers un côté. Aussi, dans le four représenté où la cuve 1 est en mode cuisson et la cuve 2 en mode préchauffage, le système d'inversion 16 ouvre uniquement les tunnels collecteurs 32 et 34. Au cours du cycle suivant, seuls les tunnels collecteurs 33 et 35 seront ouverts.

Dans le four illustré sur la figure 4, on met en oeuvre la même quantité de roche carbonatée et les mêmes débits d'air de refroidissement que dans le four classique décrit plus haut. L'air de refroidissement chauffé est extrait hors du four par l'élément de soutirage 26. Dans la cuve 1, on procède à une introduction de combustible telle qu'on obtient la formation de 105 Nm³/t de CO₂ à la combustion. On évacue au haut de la cuve 2 1330 Nm³/t d'effluent gazeux. Par le conduit de recirculation 18 on prélève 730 Nm³/t de cet effluent gazeux évacué, riche en CO₂. A cet effluent recirculé on mélange 220 Nm³/t de O₂, de façon à conserver dans le mélange comburant ainsi formé la même concentration massique de 23% de O₂ et d'obtenir lors de la combustion le même excès d'oxygène de 19% en poids par rapport aux besoins stœchiométriques. On obtient ainsi à la cheminée seulement 600 Nm³/t d'effluent gazeux présentant une teneur de 96% sur gaz sec de CO₂.

Dans le four illustré sur la figure 4, pour récupérer une partie de l'énergie de l'air chaud extrait par l'élément de soutirage 26, on peut prévoir un échange de chaleur avec la partie d'effluent gazeux recirculé par l'intermédiaire d'un échangeur de chaleur 36, avant ou après son mélange avec du dioxygène concentré.

On peut aussi prévoir en outre, dans le carneau de liaison 3 et les canaux périphériques 13, une injection d'une fraction de ladite partie prélevée de l'effluent gazeux évacué hors du four par l'intermédiaire d'un conduit d'injection 37. Eventuellement auparavant un échange de chaleur entre l'air de refroidissement chauffé, extrait hors du four, et cette fraction susdite à injecter peut avoir lieu à l'aide d'un échangeur de chaleur. par exemple l'échangeur de chaleur 36. En l'absence de celui-ci, un échangeur de chaleur non représenté peut être prévu sur le conduit d'injection 37.

Suivant encore une autre variante, on peut mitiger la température dans le carneau de liaison par injection d'eau à des endroits choisis du carneau et/ou de l'anneau périphérique. Cette eau ajoutée n'a aucun effet de dilution sur la concentration du CO₂ sur gaz sec.

De tels agencements pour récupérer la chaleur de l'air de refroidissement chauffé, extrait hors du four, à l'aide d'échangeur de chaleur ainsi que de tels dispositifs d'injection de CO2 ou d'eau dans le carneau de liaison peuvent évidemment aussi être prévus avec des fours à cuves rectangulaires.

Il est évident qu'on peut aussi concevoir un four semblable à celui représenté sur la figure 4 où l'air de refroidissement est injecté au bas d'une seule des deux cuves.

Dans le tableau 1 ci-dessous sont repris les débits dans un four classique et dans différentes variantes de four suivant l'invention et dans le tableau 2 les quantités des différents éléments gazeux à l'entrée des fours.

Dans la colonne exemples, 1 signifie un four PFRK classique, 2 et 3 sont des fours selon la figure 3 avec des débits variables d'air de refroidissement et 4 et 5 sont des fours selon la figure 4 avec et sans échangeur de chaleur.

**Tableau 1**

| | Air de combustion Nm³/t | Air de refroidissement Nm³/t | Injection de Oz Nm³/t | Effluent recyclé Nm³/t | Effluent haut du four Nm³/t | Effluent cheminée Nm³/t | DP* |
|---|---|---|---|---|---|---|---|
| 1 | 1120 | 580 | 0 | - | 2250 | 2250 | DP₀ |
| 2 | 0 | 580 | 160 | 830 | 2070 | 1240 | -13% |
| 3 | 0 | 290 | 200 | 865 | 1730 | 865 | -26% |
| 4 | 0 | 580 | 220 | 730 | 1330 | 600 | -49% |
| 5 | 0 | 580 | 250 | 820 | 1440 | 620 | -39% |

| | | | | | | | |
|---|---|---|---|---|---|---|---|
| *DP = perte de charge | | | | | | | |

**Tableau 2**

| | Injection de Oz Nm³/t | O₂ kg/t | N₂ kg/t | CO₂ kg/t | O₂ % massique | O₂ stœchiométrique kg/t | Excès de O₂ % |
|---|---|---|---|---|---|---|---|
| 1 | 0 | 333 | 1090 | 0,89 | 23 | 281 | 19 |
| 2 | 160 | 331 | 448 | 646 | 23 | 278 | 19 |
| 3 | 200 | 367 | 277 | 915 | 23 | 303 | 18 |
| 4 | 220 | 346 | 5 | 1143 | 23 | 294 | 18 |
| 5 | 250 | 394 | 6 | 1284 | 23 | 327 | 20 |

Il est bien entendu que la présente invention n'est en aucune façon limitée aux formes de réalisations décrites ci-dessus et que bien des modifications peuvent y être apportées sans sortir du cadre des revendications annexées.

On pourra par exemple avantageusement prévoir de remplacer les lances d'injection de combustible, refroidies par de l'air, par des lances isolées thermiquement.

## Revendications

1. Procédé de calcination de roche minérale dans un four droit vertical à flux parallèles régénératif, dans lequel au moins deux cuves sont interconnectées par une voie de transfert pour gaz, ce procédé comprenant, en régime production,
- un chargement de roche minérale carbonatée en haut du four,
- un préchauffage de cette roche,
- une cuisson de cette roche avec sa décarbonatation en matière calcinée,
- un refroidissement de la matière calcinée par de l'air de refroidissement, et
- un déchargement de la matière calcinée en bas des cuves,
- chaque cuve fonctionnant alternativement en mode cuisson et en mode préchauffage, une cuve étant en mode cuisson pendant une période de temps prédéterminée pendant qu'au moins une autre cuve est en mode préchauffage, et inversement,
- le mode cuisson comprenant :
ledit chargement de roche minérale carbonatée au haut de la cuve en mode cuisson,
en présence de ladite roche minérale carbonatée, préchauffée, en cours de descente dans cette cuve, une combustion de combustible en présence d'oxygène de façon à obtenir ladite cuisson de cette roche et sa décarbonatation en matière calcinée avec dégagement de fumées de combustion sous la forme d'un courant gazeux descendant en co-courant dans la cuve en mode cuisson, et
un passage dudit courant gazeux contenant ces fumées de combustion de la cuve en mode cuisson vers ladite au moins une cuve en mode préchauffage par l'intermédiaire de ladite voie de transfert pour gaz,
- le mode préchauffage comprenant :
ledit préchauffage de la roche minérale carbonatée chargée par échange de chaleur avec le courant gazeux contenant les fumées de combustion, issues de la voie de transfert pour gaz, qui est ascendant dans ladite au moins une cuve en mode préchauffage, en contre-courant de ladite roche minérale carbonatée chargée, et
une évacuation hors du four d'un effluent gazeux à base du courant gazeux contenant les fumées de combustion, au haut de ladite au moins une cuve en mode préchauffage,
**caractérisé en ce qu'**il comprend en outre
- un prélèvement d'une partie de l'effluent gazeux évacué hors du four,
- une formation d'un mélange comburant par mélange de cette partie prélevée de l'effluent gazeux évacué hors du four avec du dioxygène concentré, et
- une introduction de ce mélange comburant au haut de la cuve en mode cuisson de manière à assurer ladite combustion de combustible en présence d'oxygène,
l'effluent gazeux évacué hors du four étant concentré en CO₂ et présentant une teneur en CO₂ d'au moins 60%, notamment d'au moins 80%, et particulièrement avantageusement d'au moins 90% en volume sur gaz sec.

2. Procédé suivant la revendication 1, **caractérisé en ce que** ledit refroidissement de la matière calcinée comprend, au bas de chacune des cuves, une amenée d'air de refroidissement qui traverse en contre-courant la matière calcinée descendante et est chauffé à son contact, **en ce que** l'air de refroidissement chauffé se mélange, dans la cuve en mode cuisson, au courant gazeux contenant les fumées de combustion, avant son passage à travers la voie de transfert pour gaz, et, dans ladite au moins une cuve en mode préchauffage, à ce courant gazeux après ce passage et **en ce que** l'effluent gazeux concentré en CO2 qui est évacué hors du four contient les fumées de combustion et l'air de refroidissement.

3. Procédé suivant la revendication 1, **caractérisé en ce que** ledit refroidissement de la matière calcinée comprend, au bas de la seule cuve en mode cuisson, une amenée d'air de refroidissement qui traverse en contre-courant la matière calcinée descendante et est chauffé à son contact, **en ce que** l'air de refroidissement chauffé se mélange au courant gazeux contenant les fumées de combustion, avant son passage à travers la voie de transfert pour gaz, et **en ce que** l'effluent gazeux concentré en CO2 qui est évacué hors du four contient les fumées de combustion et l'air de refroidissement.

4. Procédé suivant l'une ou l'autre des revendications 2 et 3, **caractérisé en ce que** l'air de refroidissement est amené au four en un volume total équivalant ou inférieur à un minimum thermodynamique nécessaire pour refroidir la matière calcinée à une température de référence de 100°C.

5. Procédé suivant la revendication 4, **caractérisé en ce que** le volume total d'air de refroidissement amené au four est de l'ordre de 40 à 60% dudit minimum thermodynamique, de préférence égal à 50% de celui-ci.

6. Procédé suivant la revendication 1, **caractérisé en ce que** ledit refroidissement de la matière calcinée comprend, au bas de chacune des cuves ou au bas de la seule cuve en mode cuisson, une amenée d'air de refroidissement qui traverse en contre-courant la matière calcinée descendante et est chauffé à son contact, **en ce que** le procédé comprend en outre une extraction de l'air de refroidissement chauffé hors du four et **en ce que** l'effluent gazeux évacué hors du four contient une teneur en CO₂ d'au moins 90% en volume sur gaz sec.

7. Procédé suivant la revendication 6, **caractérisé en ce qu'**il comprend en outre un échange de chaleur entre l'air de refroidissement chauffé, extrait hors du four, et ladite partie prélevée de l'effluent gazeux évacué hors du four, avant ou après son mélange avec du dioxygène concentré.

8. Procédé suivant l'une ou l'autre des revendications 6 et 7, **caractérisé en ce qu'**il comprend en outre, dans la voie de transfert pour gaz, une injection d'une fraction de ladite partie prélevée de l'effluent gazeux évacué hors du four et, éventuellement avant cette injection, un échange de chaleur entre l'air de refroidissement chauffé, extrait hors du four, et la fraction susdite à injecter.

9. Procédé suivant l'une quelconque des revendications 1 à 8, **caractérisé en ce qu'**il comprend en outre, dans la voie de transfert pour gaz, une injection d'eau.

10. Procédé suivant l'une quelconque des revendications 1 à 9, **caractérisé en ce que** ladite combustion de combustible comprend une introduction dans la cuve en mode cuisson d'un combustible gazeux, liquide ou solide et **en ce que**, dans le cas d'un combustible solide, ladite introduction est effectuée à l'aide d'une portion de ladite partie prélevée de l'effluent gazeux évacué hors du four, ou d'une autre source de CO2, comme gaz porteur.

11. Procédé suivant l'une quelconque des revendications 1 à 10, **caractérisé en ce que** ladite combustion de combustible a lieu en présence d'un excès d'oxygène par rapport aux besoins stoechiométriques.

12. Four droit vertical à flux parallèles régénératif pour la mise en oeuvre du procédé suivant l'une quelconque des revendications 1 à 11, comprenant
- au moins deux cuves (1,2) interconnectées par une voie de transfert pour gaz,
- chacune desdites cuves comprenant, en position en service ou hors service,
- au moins un dispositif d'alimentation en combustible (4),
- au moins une ouverture d'amenée de comburant contenant de l'oxygène (6),
- une entrée (5) pour le chargement d'une roche minérale carbonatée, au haut des cuves,
- une sortie (8) pour le déchargement de matière calcinée produite, au bas des cuves,
- un conduit d'évacuation d'effluent gazeux (14) au haut des cuves, qui est relié à une cheminée (15), et
- une amenée d'air de refroidissement (7) pour refroidir la matière calcinée produite,
le four comprenant un système d'inversion (16) du fonctionnement des cuves, agencé pour que chaque cuve fonctionne, en régime production, alternativement en mode cuisson et en mode préchauffage, une cuve étant en mode cuisson pendant une période de temps prédéterminée pendant qu'au moins une autre cuve est en mode préchauffage, et inversement, ce système d'inversion (16) commandant dans ce but lesdites positions en service ou hors service, **caractérisé en ce qu'**il comprend en outre
- un circuit de recirculation (18) qui est agencé entre le conduit d'évacuation d'effluent gazeux (14) susdit des cuves et lesdites ouvertures d'amenée de comburant (6) des cuves,
- un organe de séparation (17), capable de prélever une partie de l'effluent gazeux évacué du four par le conduit (14) et de l'introduire dans le circuit de recirculation (18), et
en dessous du carneau de liaison (3), les cuves sont pourvues d'un anneau collecteur (25) communiquant avec un élément de soutirage (26) de manière à permettre une extraction hors du four d'air de refroidissement chauffé, ou
(ii) **caractérisé en ce que** les cuves sont de section rectangulaire, **en ce qu'**un premier côté (28) d'une cuve (1) fait face à un premier côté (29) d'une cuve voisine (2) et chaque cuve comporte un second côté (30,31) qui est à l'opposé de ceux qui se font face (28,29) et **en ce que** la voie de transfert pour gaz est un carneau de liaison (3) qui relie directement une cuve à l'autre par leurs premiers côtés (28,29), et **en ce que**, en dessous du carneau de liaison, lesdits premiers côtés et lesdits seconds côtés des cuves sont pourvus d'un tunnel collecteur(32 à 35) communiquant avec un élément de soutirage (26) de manière à permettre une extraction hors du four d'air de refroidissement chauffé.

13. Four suivant la revendication 12, **caractérisé en ce que** les cuves circulaires comportent en outre, au fond, un élément collecteur central (27) communiquant avec un élément de soutirage (26) de manière à permettre une extraction hors du four d'air de refroidissement chauffé, en dessous du carneau de liaison (3).

14. Four suivant l'une quelconque des revendications 12 à 13, **caractérisé en ce que** le four comporte, comme source de dioxygène pour le circuit de recirculation, une unité de séparation d'air (20) en dioxygène et diazote.

15. Four suivant l'une quelconque des revendications 12 à 14, **caractérisé en ce qu'**un échangeur de chaleur (36) alimenté en air de refroidissement chauffé, extrait du four, est monté sur le circuit de recirculation (18).

16. Four suivant l'une quelconque des revendications 12 à 15, **caractérisé en ce qu'**il comporte des équipements de déchargement de matière calcinée (24) résistant à des températures supérieures à 100°C.
